# EUROPEAN PATENT APPLICATION

(11) **EP 2 345 680 A1**
(43) Date of publication of application: **20.07.2011**
(21) Application number: 09824561.6
(22) Date of filing: 29.10.2009
(51) Int. Cl.: C08G 18/65, C08G 101/00, C08L 61/08, C08L 75/12

(54) **EXPANDABLE COMPOSITION FOR POLYURETHANE FOAM, AND POLYURETHANE FOAM**

(30) Priority: 06.11.2008 JP 2008284997
(71) Applicant: Asahi Organic Chemicals Industry Co., Ltd., Nobeoka-city Miyazaki 882-8688 (JP)
(72) Inventor: MIYAMOTO, Takashi, Niwa-gun Aichi 480-0105 (JP)
(74) Representative: Paget, Hugh Charles Edward
(86) International application number: PCT/JP2009/005721
(87) International publication number: WO 2010/052860

(57) **Abstract**

A foamable composition for polyurethane foam is provided which advantageously improves heat insulating properties, a long-term stability, and a dimensional stability of a polyurethane foam that is produced by using carbon dioxide as a blowing agent. Further, a polyurethane foam which has excellent heat insulating properties is provided by foaming and curing the foamable composition for polyurethane. In the production of the polyurethane foam in which carbon dioxide is used in the foaming, a polyol component is used which includes a phenolic resin polyol that is obtained by adding at least one alkylene oxide to a phenolic novolak resin, and an aromatic amine polyol that is obtained by adding at least one alkylene oxide to an aromatic diamine such that the total amount thereof is 60% or more by mass, based on the total polyol component.

## Description

### TECHNICAL FIELD

The present invention relates to a foamable composition for use in the production of polyurethane foam, and a polyurethane foam. More particularly, the present invention relates to a technique for advantageously improving heat insulating properties and a dimensional stability of the polyurethane foam that is produced by using carbon dioxide as a blowing agent.

### BACKGROUND ART

Conventionally, polyurethane foams are mainly used as heat insulating materials due to its excellent heat insulating properties and adhesiveness. For example, the polyurethane foams are used as heat insulating materials for inside and exterior walls, panels and the like of buildings, metal sidings, electric refrigerators, transfusion pipes and the like, and as heat insulating and dew preventing materials for building frames, walls, ceilings, roofs and the like of residential buildings, general buildings, cold storage ware houses and the like. Generally, the polyurethane foams are produced by first preparing a foamable composition for polyurethane foam by mixing continuously or intermittently a polyol solution (premix solution), which is obtained by adding a blowing agent and further auxiliary agents such as a catalyst, a foam stabilizer, a flame retardant, and the like to a polyol component as necessary, with an isocyanate component in a mixer, and then foaming and curing the foamable composition for polyurethane foam by a slab foaming process, a pouring process, a spraying process, a continuous laminating process, or the like.

For reasons of environmental protection the foamable composition for polyurethane foam used therein employs an alternative for chlorofluorocarbon, namely, hydrofluorocarbon (for example, HFC-245fa, HFC-365mfc) as a blowing agent, which destroy the ozone layer less or very little. However, it is assumed that the use of the alternative for chlorofluorocarbon would be restricted in the near future. Therefore, in recent years the polyurethane foams have been studied which are produced by using carbon dioxide (carbon dioxide gas) as an alternative of a part or all of the conventional blowing agents such as an alternative chlorofluorocarbon blowing agent. For example, patent documents 1 and 2 disclose a polyurethane foam produced by so-called "water-blowing process" that employs carbon dioxide as a blowing agent which is generated by a chemical reaction of a polyisocyanate component and water. Further, patent document 3 discloses a polyurethane foam produced by using, as a blowing agent, carbon dioxide generated in the reaction of water and a polyisocyanate component, together with carbon dioxide under supercritical state, subcritical state or liquid state.

However, the polyurethane foam produced by using carbon dioxide as a blowing agent generally is inferior in heat insulating properties to a polyurethane foam produced by other foaming processes. Further, the heat insulating properties of such polyurethane foam worsens with the passage of time and it does not have a long-term stability.

In addition, water to generate carbon dioxide and carbon dioxide under supercritical state or subcritical state are less helpful to reduce a viscosity of polyol solution compared to other solvent blowing agents. Thus, when employing carbon dioxide as a blowing agent, it is necessary to reduce a viscosity by reducing a viscosity of the polyol component or employing polyol having a low viscosity, for example polyether polyol, such that the viscosity of polyol solution can be in practical use. Especially, when employing the phenolic resin polyol as the polyol component, which provides heat resistance and flame retardancy to a foam, the viscosity of the polyol component itself is high. Therefore, reduction in the viscosity thereof has been studied. For example, patent documents 4 to 6 propose a phenolic resin polyol which is obtained by adding an alkylene oxide to a phenolic resin. However, those patent documents do not discuss the above-described problems relating to the polyurethane foam that is produced by using carbon dioxide as a blowing agent, i.e., deterioration of heat insulating properties. Further, when employing a phenolic resin polyol, the dimensional stability of polyurethane foam to be produced may be insufficient.

Patent document 7 discloses that in a polyol composition for rigid polyurethane foam to be used in a water-blowing process, the rigid polyurethane foam excellent in heat insulating properties and strength can be produced by using a polyether polyol containing tertiary amine group (aromatic amine polyol) that is obtained by adding an alkylene oxide to an aromatic diamine as one of polyol compounds. However, even if such polyol compound is used, the polyurethane foam has insufficient heat insulating properties and is lack of flame retardancy. Further, the polyurethane foam still has a problem that the heat insulating properties are worsen with the passage of time.

Patent Document 1: JP-A-4-227645
Patent Document 2: JP-A-2004-59641
Patent Document 3: JP-A-2004-107376
Patent Document 4: JP-A-5-170851
Patent Document 5: JP-A-11-217431
Patent Document 6: JP-A-60-48942
Patent Document 7: JP-A-2005-344079

### SUMMARY OF THE INVENTION

### PROBLEMS TO BE SOLVED BY THE INVENTION

The present invention has been made in the light of the situations described above. It is therefore an object of the present invention to provide a foamable composition for polyurethane foam which advantageously improves heat insulating properties, a long-term stability and a dimensional stability of a polyurethane foam that is produced by using carbon dioxide as a blowing agent. It is another object of the invention to provide a polyurethane foam having excellent heat insulating properties that is obtained by foaming and curing the foamable composition for polyurethane foam.

### MEANS FOR SOLVING THE PROBLEMS

The inventors of the present invention have conducted intensive study and research in an effort to solve the above-described problems and found that heat insulating properties and a dimensional stability of polyurethane foam to be obtained is effectively improved by using a polyol component including a phenolic resin polyol that is obtained by adding at least one alkylene oxide to a phenolic novolak resin and an aromatic amine polyol that is obtained by adding at least one alkylene oxide to an aromatic diamine, and thus excellent heat insulating properties can be exhibited over a long period of time. Then, the present invention has been completed.

Specifically, the present invention relates to a foamable composition comprising a combination of a polyol component and a polyisocyanate component, the foamable composition being used in the production of a polyurethane foam obtainable by reacting the polyol component with the polyisocyanate component, and foaming the reacted combination of the polyol component and the polyisocyanate component in the presence of carbon dioxide, in which the polyol component includes a phenolic resin polyol obtained by adding at least one alkylene oxide to a phenolic novolak resin, and an aromatic amine polyol obtained by adding at least one alkylene oxide to an aromatic diamine, such that the total amount of the phenolic resin polyol and the aromatic amine polyol is 60% by mass or more, based on the total polyol component.

According to a preferable aspect of the foamable composition for polyurethane foam of the present invention, the carbon dioxide is generated by the reaction of water with the polyisocyanate component.

According to another preferable aspect of the present invention, the phenolic novolak resin contains free phenols in an amount of from 1 to 50% by mass, preferably from 5 to 35% by mass, more preferably from 10 to 30% by mass.

According to another preferable aspect of the foamable composition for polyurethane foam of the present invention, the aromatic diamine is a tolylene diamine.

According to still another preferable aspect of the foamable composition for polyurethane foam of the present invention, the at least one alkylene oxide added to the phenolic novolak resin or the aromatic diamine is selected from an ethylene oxide, a propylene oxide and a mixture thereof.

Further, in the present invention, it is preferable that the at least one alkylene oxide added to the phenolic novolak resin is one of an ethylene oxide and a combination of 50% by mass or more of an ethylene oxide and 50% by mass or less of a propylene oxide. Furthermore, it is preferable that 10% to 100% by mass of the at least one alkylene oxide added to the phenolic novolak resin or the aromatic diamine is a propylene oxide.

According to a further preferable aspect of the foamable composition for polyurethane foam of the present invention, each of the phenolic resin polyol and the aromatic amine polyol is present in an amount of 30% by mass or more, preferably 40% by mass or more, based on the total polyol component. Further, it is preferable that phenolic resin polyol and the aromatic amine polyol are present in a mass ratio of 3/7 to 7/3.

It is another object of the present invention to provide a polyurethane foam produced by foaming and curing the foamable composition for polyurethane foam according to any one of the above aspects. The thus obtained polyurethane foam advantageously has a characteristic that a thermal conductivity (initial value) thereof is less than 0.022 W/(m·K).

### ADVANTAGEOUS EFFECT OF THE INVENTION

In the foamable composition for polyurethane according to the present invention, although carbon dioxide is used as a blowing agent, predetermined phenolic resin polyol and aromatic amine polyol are used in combination as a polyol component. As a result, a thermal conductivity (initial value) of the obtained polyurethane foam is much lower than that of the conventional polyurethane foam in which carbon dioxide is used as a blowing agent, thereby effectively improving the heat insulating properties. In addition, the rise in the thermal conductivity with the passage of time can be advantageously suppressed. As a result, excellent heat insulating properties can be kept for a long period of time. Furthermore, the polyurethane foam is excellent in a flame retardancy and a dimensional stability, and thus the polyurethane foam can be used for a wide variety of applications.

A polyurethane foam according to the present invention also can have the above described effects, because the polyurethane foam is formed by using the above described foamable composition for polyurethane foam. That is, the obtained polyurethane foam has heat insulating properties, a long-term stability and a dimensional stability, and a flame retardancy, which are advantageously improved.

### MODES FOR CARRYING OUT THE INVENTION

To further clarify the present invention, there will be hereinafter described in detail a foamable composition for polyurethane foam and a polyurethane foam obtained by using the same.

In the foamable composition for polyurethane foam according to the present invention, at least, carbon dioxide is used as a blowing agent, and a phenolic resin polyol and an aromatic amine polyol are comprised in a polyol component.

The phenolic resin polyol comprised in a polyol component in the present invention is obtained by adding at least one alkylene oxide to a phenolic novolak resin. The phenolic novolak resin used in the preparation of the phenolic resin polyol contains free phenols in an amount of from 1 to 50% by mass, preferable from 5 to 35% by mass, more preferably from 10 to 30% by mass, to provide a low viscosity. If the amount of the free phenols is less than 1% by mass, it is difficult to effectively provide a low viscosity and the obtained foamable composition for polyurethane foam may not be suitable to be in practical use. On the other hand, if the amount of the free phenols is more than 50% by mass, the obtained polyurethane foam may be too soft and formability thereof may be deteriorated.

The phenolic novolak resin described above is advantageously produced as an initial condensation product of the phenolic novolak resin, for example, by compounding phenols with aldehydes in a ratio of 1 mol of phenols to 0.3 to 1.0 mol of aldehydes, and reacting them in the presence of acid catalyst under a predetermined condition (temperature and time), and then dehydrating it under reduced pressure if necessary. Here, the initial condensation product refers to a phenolic resin which has a relatively low molecular weight and which is a mixture of condensation product having about 2 to 10 phenol nuclei in one molecule and unreacted phenols. The process for producing the phenolic novolak resin (initial condensation) is not limited to the above-described process. The phenolic novolak resin can be produced by suitably determining the reaction condition and reaction environment (for example, ordinary pressure, reduced pressure, increased pressure, existence or nonexistence of inactive gas, and gradual or sequential reaction), in which the free phenols described above are present in a predetermined ratio in the phenolic novolak resin to be generated. Further, the amount of the free phenols can be controlled so as to be in the above ratio by further adding phenols, for example, to the above-described condensation product after being reacted, if necessary.

The phenols used in the production of the phenolic novolak resin are not limited. Although phenol is generally employed, alkylphenols such as cresol, ethylphenol, xylenol, p-t-butylphenol, octylphenol, nonylphenol, dodecylphenol, p-phenylphenol and the like can be used singly or two or more of any them can be used in combination as necessary. Or alternatively, any one or more of the alkylphenols can be used together with phenol. In addition, halogenated phenols such as m-chlorophenol, o-bromophenol and the like, polyhydric phenols such as resorcinol, catechol, hydroquinone, phloroglucinol and the like, bisphenols such as bisphenol A [2,2-bis(4-hydroxyphenyl)propane], bisphenol F (4,4'-dihydroxydiphenylmethane) and the like, residues of phenolic compounds such as resorcinol, catechol, bisphenol A, bisphenol F and the like, α-naphthol, β-naphthol, and β-hydroxyanthracene can be used singly or two or more of any them can be used in combination. Or alternatively, any one or more of them can be used together with phenol or alkylphenol.

The aldehydes to be reacted with the above phenols are also not limited. Although one of, or both of formalin and paraformaldehyde is/are generally used, other formaldehydes (for example, trioxane, tetraoxane, and polyxoymethylene), glyoxal and the like can be used singly or can be used together, as necessary.

As the acid catalyst used in the production of the phenolic novolak resin, oxalic acid is preferably used. In addition to the oxalic acid, examples of the acid catalysts include organic sulfonic acid (for example, p-toluenesulfonic acid), divalent metal (for example, magnesium, zinc, and lead) salt of organic carboxylic acid (for example, acetic acid), chloride of divalent metal, oxide of divalent metal, and inorganic acid (for example, hydrochloric acid and sulfuric acid). Any one of, or any combination thereof may be used.

The phenolic resin polyol comprised in the polyol component in the present invention is obtained by addition reaction of the phenolic novolak resin produced as described above with the alkylene oxide in the presence of the basic catalyst. Accordingly, the alkylene oxide is added to the phenolic hydroxyl group of the phenolic novolak resin favorably containing free phenols, so that the phenolic resin polyol in which the phenolic hydroxyl group is converted to alcoholic hydroxyl group is obtained. By this addition of the alkylene oxide, the phenolic resin is modified to further improve hydrophilicity of the polyol component. As a result, the phenolic resin polyol is favorably used as a polyol for use in the foaming process in which carbon dioxide is used as a blowing agent, and also excellent in the compatibility with the polyisocyanate component which will be described later.

The amount of alkylene oxide is suitably adjusted such that the phenolic resin polyol has a hydroxyl number of from 100 to 450 mgKOH/g, preferably from 200 to 450 mgKOH/g, more preferably from 250 to 350 mgKOH/g. When the hydroxyl number is less than 100 mg KOH/g, a foam to be obtained is too soft and formability would be deteriorated, and thus the intended polyurethane foam may not be obtained. On the other hand, when the hydroxyl number is more than 450 mgKOH/g, the viscosity would not be sufficiently lowered, and thus it would be difficult to be mixed with a polyisocyanate component. Although the viscosity of phenolic resin polyol is changed in response to the change of the hydroxyl number, the viscosity of the phenolic resin polyol in the present invention is set in a range of from 500 to 50000 mPa·s/25°C.

Examples of the alkylene oxides used in the production of the phenolic resin polyol include ethylene oxide, propylene oxide, and butylene oxide. Preferably, one of ethylene oxide, propylene oxide, and a combination thereof is preferably employed in terms of hydrophilicity of the phenolic resin polyol. More preferably, one in which the ethylene oxide is present in an amount ranging from 50 to 100% by mass, preferably 75 to 100% by mass, more preferably 100% by mass (the ethylene oxide solely) based on the total amount of the ethylene oxide and the propylene oxide is employed to further improve heat insulating properties of foam. In terms of the dimensional stability of foam, it is preferable that one in which the propylene oxide is present in an amount ranging from 10 to100% by mass, preferably from 25 to 100% by mass, more preferably from 100% by mass (propylene oxide solely) based on the total amount of alkylene oxide is employed. The amount of alkylene oxide is suitably determined such that the amount of alkylene is 1 to 20 times greater than that of phenolic hydroxyl group of the phenolic novolak resin in terms of equivalent.

Examples of the basic catalysts, which is used in the production of the phenolic resin polyol, i.e., in the addition reaction of the phenolic novolak resin and the alkylene oxide, include alkali catalysts such as sodium hydroxide, potassium hydroxide, barium hydroxide, calcium hydroxide and the like. At least one of the alkali catalysts is suitably selected and used, but examples of the basic catalysts are not limited to them.

The aromatic amine polyol, which is essentially comprised in the polyol component together with the phenolic resin polyol, is obtained by adding an alkylene oxide to an aromatic diamine according to the known process. In other words, the aromatic amine polyol is a multifunctional polyether polyol compound having terminal hydroxyl groups which is obtained by providing an aromatic diamine as an initiator and ring-opening adding an alkylene oxide to the aromatic diamine.

As the aromatic diamine, which provides the aromatic amine polyol and acts as an initiator, any known various aromatic diamine compounds can be used. Examples of the aromatic diamine include various methyl substitutions of phenylene diamine, which are collectively referred to as a tolylene diamine, derivatives in which substitution of methyl, ethyl, acetyl, benzoyl and the like is introduced to amino group of phenylene diamine, 4,4'-diaminodiphenylmethane, p-phenylenediamine, o-phenylenediamine, and naphthalene diamine. Preferably, the tolylene diamine is used to improve the properties of the polyurethane foam to be obtained.

Examples of the alkylene oxides added to the aromatic diamine include known cylclic ether compounds (epoxide) such as ethylene oxide, propylene oxide and the like. Further, any combination of these oxides may be preferably used. Preferably, in terms of the dimensional stability of foam, the alkylene oxide in which the propylene oxide is present in an amount ranging from 10 to 100% by mass, more preferably 25 to 75% by mass, based on the total of the alkylene oxide, is employed.

As such an aromatic amine polyol obtainable by adding an alkylene oxide to an aromatic diamine, various aromatic amine polyols are commercially available. For example, SANNIX HA-501, SANNIX HM-550, and SANNIX HM-551 (available from Sanyo Chemical Industries, Ltd.) can be exemplified as a tolylene diamine polyol. Any of commercially available aromatic amine polyols can be suitably selected and used in the present invention. The hydroxyl number of the aromatic amine polyol is preferably within a range of from 300 to 500 mgKOH/g, and the viscosity thereof is preferably within a range of from 500 to 20000 mPa·s/25°C.

In the present invention, the aromatic amine polyol is comprised in the polyol component together with the phenolic resin polyol. The aromatic amine polyol and the phenolic resin polyol are comprised such that the total amount thereof is 60% by mass or more, based on the total polyol component, specifically, it is favorable that each of the aromatic amine polyol and the phenolic resin polyol is present in the polyol component in an amount of 30% by mass or more, preferably, 40% by mass or more in order to better achieve the object of the present invention. Further, it is favorable that the phenolic resin polyol and the aromatic amine polyol are present therein in a mass ratio of 3/7 to 7/3, preferably 4/6 to 6/4. When the ratio of the phenolic resin polyol is too high the dimensional stability would be less improved, and when the ratio of the aromatic amine polyol is too high, the thermal conductivity and the flame retardancy would be less improved, which are not desirable.

In the present invention, the phenolic resin polyol and the aromatic amine polyol are used in combination as the polyol component. As long as it does not adversely affect the excellent effect obtained by the combination of the polyol compounds, any other known polyol compounds may be used together with the combination of the phenolic resin polyol and the aromatic amine polyol. Examples of the known polyol compounds include conventionally known polyether polyols such as aliphatic polyether polyol, aliphatic amine polyether polyol, aromatic polyether polyol and the like.

In the foamable composition for polyurethane foam according to the present invention, at least, the above described phenolic resin polyol and aromatic amine polyol are comprised in the polyol component, and further, carbon dioxide and/or a source to generate the carbon dioxide is introduced to the foamable composition for polyurethane foam.

Here, the carbon dioxide or the source to generate the carbon dioxide is introduced to the foamable composition for polyurethane foam by (1) adding water, which act as a source to generate the blowing agent, or by (2) adding carbon dioxide under supercritical state or subcritical state. Either of (1) and (2), or a combination of the both may be employed. By the way, "the carbon dioxide under subcritical state" refers to carbon dioxide under liquid state in which the pressure is over the critical pressure for carbon dioxide and the temperature is less than the critical temperature, or carbon dioxide under liquid state in which the pressure is below the critical pressure for carbon dioxide and the temperature is over the critical temperature, or carbon dioxide in which both the temperature and the pressure are below the critical point for carbon dioxide, but nearly the critical state. Further, "the carbon dioxide under supercritical state" refers to carbon dioxide under fluid state in which both the pressure and the temperature are over the critical pressure for carbon dioxide and the critical temperature.

Particularly, in the water-blowing process of the above (1), the water to generate the blowing agent generate carbon dioxide to be used in the foaming, by the reaction with the polyisocyanate component which will be described later, and help a little to lower the viscosity of the phenolic resin polyol. The amount of water for the water-blowing process is suitably determined such that a desired foam density is obtained. Generally, water is employed in an amount ranging from 0.3 to 10 parts by mass, preferably 2 to 8 parts by mass, more preferably 4 to 6 parts by mass, based on 100 parts by mass of the polyol component including the phenolic resin polyol and the aromatic amine polyol. When the amount of water is less than 0.3 parts by mass, based on 100 parts by mass of the polyol component including the phenolic resin polyol and the aromatic amine polyol, sufficient amount of carbon dioxide is not generated. On the other hand, when the amount of water is more than 10 parts by mass, foam to be obtained may be brittle because of the extreme reduction in density.

In addition, when the carbon dioxide under supercritical state or subcritical state is introduced, the amount thereof is suitably determined such that the desired foam density is obtained. Generally, the amount thereof is suitably determined in a range of from 0.3 to 10 parts by mass, preferably from 0.5 to 5 parts by mass, based on 100 parts by mass of the polyol component including the phenolic resin polyol and the aromatic amine polyol.

In the foamable composition for polyurethane foam according to the present invention, a polyisocyanate component is employed which produces polyurethane by reacting with the polyol component including a phenolic resin polyol and an aromatic amine polyol. The polyisocyanate component is an organic isocyanate compound including two or more of isocyanate groups (NCO group) in a molecule. Examples of the organic isocyanate compounds include aromatic polyisocyanates such as diphenylmethane diisocyanate, polymethylene polyphenylene polyisocyanate, tolylene diisocyanate, polytolylene polyisocyanate, xylylene diisocyanate, and naphthalene diisocyanate, aliphatic polyisocyanates such as hexamethylene diisocyanate, alicyclic polyisocyanates such as isophorone diisocyanate, urethane polymer having isocyanate group at molecular end, modified isocyanurate of polyisocyanate, and modified carbodiimide. Any one of, or any combination thereof may be used. Generally, polymethylene polyphenylene polyisocyanate (crude MDI) is preferably used in terms of reactivity, economy, handling property and the like.

The ratio of the polyisocyanate component and the polyol component including the phenolic resin polyol and the aromatic amine polyol is changed depending on kinds of foams (for example, polyurethane, polyisocyanurate). Generally, the ratio is suitably determined such that the NCO/OH index (equivalent ratio) indicating a ratio of isocyanate group (NCO) of the polyisocyanate component to hydroxyl group (OH) of the polyol component (the total polyols) is in a range of from about 0.9 to about 2.5.

In the foamable composition for polyurethane foam according to the present invention, generally, a catalyst and a foam stabilizer may be added in addition to the phenolic resin polyol, the aromatic amine polyol, the carbon dioxide (water to generate the blowing agent in the case of the water-blowing process), and the polyisocyanate component.

Specifically, when employing water to generate the blowing agent and it is required to generate carbon dioxide at an early stage by the reaction of the polyisocyanate component with water, an amine blowing catalyst which accelerates the reaction of the polyisocyanate with water is advantageously used. Examples of the amine blowing catalysts include pentamethyldiethylenetriamine, bis(dimethylaminoethyl)ether, and N,N,N'-trimethylaminoethylethanolamine. Any one of, or any combination of these amine blowing catalysts may be used. Preferably, the amine blowing catalyst is present in an amount ranging from about 1 to about 30 parts by mass, based on 100 parts by mass of the polyol component including the phenolic resin polyol and the aromatic amine polyol.

When it is required to accelerate the reaction of the polyisocyanate component with the polyol component, a gelling catalyst is advantageously used. The gelling catalyst is suitably selected depending on kinds of foams. For example, a catalyst for urethanization or a catalyst for isocyanuration may be singly used or they may be used in combination. Examples of the catalysts for urethanization include tertiary amine, dibutyltin dilaurate, ethylmorpholine, triethylene diamine, tetramethylhexamethylene diamine, bismuth salts of fatty acid such as bismuth octylate (bismuth 2-ethylhexylate), bismuth neodecanoate, bismuth neododecanoate, and bismuth naphthenate, and lead naphthenate. Examples of the catalysts for isocyanuration include hydroxyalkyl quaterny ammonium salt, alkali metal salts of fatty acid such as potassium octylate, and sodium acetate, and tris(dimethylaminopropyl) hexahydrotriazine. Any one of, or any combination of these gelling catalysts may be used. Preferably, the gelling catalyst is generally present in an amount ranging from about 0.1 to about 15 parts by mass, based on 100 parts by mass of the polyol component.

The above-described foam stabilizer is used to regulate the cell structure of the polyurethane foam. Here, silicone or nonionic surfactant is preferably used. Examples of the foam stabilizers include dimethylpolysiloxane, polyoxyalkylene modified dimethylpolysiloxane, polysiloxane oxyalkylene copolymer, polyoxyethylene sorbitan fatty acid ester, ethylene oxide adducts of caster oil, and ethylene oxide adducts of lauryl fatty acid. Any one of, or any combination thereof may be used. An amount of the foam stabilizer is suitably determined depending on initial properties of the foam or a kind of foam stabilizer to be used. Preferably, the foam stabilizer is added at an amount ranging from about 0.1 to about 10 parts by mass, based on 100 parts by mass of the polyol component.

In the foamable composition for polyurethane foam according to the present invention, auxiliary agents may be suitably selected and used together with a flame retardant and an auxiliary blowing agent as necessary. Examples of the auxiliary agents include formaldehyde scavengers such as urea and melamine, foam refinements such as trimethyl methoxysilane, a plasticizer, and a reinforcement material.

As the flame retardant, phosphate which do not put burden on the environment and which act as a viscosity reducing agent of the foamable composition is advantageously used. Examples of the phosphates include tris(chloroethyl)phosphate, tris(chloropropyl)phosphate, and triethylphosphate. When adding the phosphate, the amount thereof is suitably determined depending on initial properties of foam or a kind of flame retardant. Preferably, the phosphate is present in an amount ranging from 10 to 60 parts by mass, more preferably, from about 10 to about 40 parts by mass, based on 100 parts by mass of the phenolic resin polyol. As the flame retardant, aluminum hydroxide and the like may be favorably used other than the phosphate.

The auxiliary blowing agent is employed to make up for the time-lag between the foaming caused by the generation of carbon dioxide and the curing, by the properties (high foamability and foam stability) of the auxiliary blowing agent, when water is used to generate the blowing agent. Particularly, the auxiliary blowing agent is effective when the foamable composition for polyurethane foam according to the present invention is foamed and cured by a spray process. Examples of the auxiliary blowing agents include alkali metal salt of fatty acid which is known as a component of soap. More specific examples include sodium salt and potassium salt of fatty acids such as lauric acid, myristic acid, palmitic acid, stearic acid, oleic acid, linoleic acid, and linolenic acid, which have 12 to 18 carbon atoms. Preferably, in the water-blowing process, potassium salt of fatty acid is used.

In the foamable composition for polyurethane foam according to the present invention, carbon dioxide is employed as a blowing agent as described above in terms of protection of the ozone layer. As long as the carbon dioxide is employed as the main blowing agent, hydrogen peroxide, hydrofluorocarbons such as, pentafluoropropane (HFC-245fa), pentafluorobutane (HFC-365mfc), tetrafluoroethane (HFC-134a) and the like, low-boiling aliphatic hydrocarbons such as pentane, cyclopentane and the like, and halogenized hydrocarbons such as dichloromethane, isopropylchloride and the like may be added as an auxiliary agent to help the foaming caused by carbon dioxide as necessary.

In the production of the foamable composition for polyurethane foam according to the present invention by using the above described phenolic resin polyol, the same process used in the production of the conventional foamable composition for polyurethane foam may be employed.

For example, when the water-blowing process is employed, i.e., carbon dioxide generated by the reaction of water with a polyisocyanate is used as the blowing agent, first, a polyol solution (premix solution) is prepared by adding water, which act as a source to generate the blowing agent, and as necessary, adding auxiliary agents such as a blowing catalyst, a gelling catalyst, a foam stabilizer, a flame retardant, an auxiliary blowing agent and the like, to the phenolic resin polyol and the aromatic amine polyol which are comprised in the polyol component. Second, the prepared polyol solution and the polyisocyanate component is stirred and mixed at high speed by a low-pressure high-speed stirring mixer, or high-pressure collision mixed by a high-pressure collision mixer (for example, a spray-in-place machine), so that a liquid foamable composition for polyurethane foam is produced. In the present invention, the polyol component is advantageously mixed with the polyisocyanate component because the phenolic resin polyol and the aromatic amine polyol which respectively has a low viscosity suitable for the water-blowing process are employed, and thus the foamable composition having uniform quality is produced.

When carbon dioxide under supercritical state or subcritical state is used as a blowing agent, a polyol solution (premix solution) is prepared by adding, as necessary, auxiliary agents such as a blowing catalyst, a gelling catalyst, a foam stabilizer, a flame retardant, an auxiliary blowing agent and the like, to the phenolic resin polyol and the aromatic amine polyol, which are comprised in the polyol component. Then, the carbon dioxide under supercritical state or subcritical state is added preferably to the polyol solution and mixed under a predetermined pressure and temperature just before that the prepared polyol solution is mixed with the polyisocyanate component. Thereafter, the polyisocyanate component is further added and mixed. As a result, the liquid foamable composition for polyurethane foam can be produced.

The foamable composition for polyurethane foam produced as the above is foamed and cured to form the intended polyurethane foam, for example, by a continuous laminating process, a pouring process, and a spraying process. According to the continuous laminating process, the foamable composition is applied on a plate material and foamed and cured in a plate shape. According to the pouring process, the foamable composition is poured and filled in parts of the electric refrigerator, for example, which requires insulating properties, or in a honeycomb structure of a light weight and high strength board, and foamed and cured. According to the spraying process, the foamable composition is sprayed from a spray-gun head of a spraying-in-place machine to a material on which the foamable composition is applied, and foamed and cured.

As described above, since the above described phenolic resin polyol and aromatic amine polyol are comprised in the polyol component, the polyurethane of the present invention which is obtained by using the above-described foamable composition for polyurethane foam have excellent heat insulating properties even though carbon dioxide is used as a blowing agent. Specifically, a thermal conductivity (initial value) thereof is lower than that of the polyurethane foam obtained by the conventional water-blowing process, i.e., less than 0.022 W/(m·K), preferably 0.021 W/(m·K) or less, and rise in the thermal conductivity with the passage of time is advantageously prevented. Consequently, excellent heat insulating properties can be exhibited for a long period of time. Here, in the present invention, "thermal conductivity" is the thermal conductivity measured in accordance with JIS A 1412. Specifically, "thermal conductivity (initial value)" is the thermal conductivity measured in an initial stage (between 16 hours to two days) after the production of polyurethane. When the thermal conductivity of the polyurethane foam is high, thickness of the foam should be large so as to have the same heat insulating properties. Accordingly, by lowering the thermal conductivity, installation space can be decreased and price of polyurethane production can be lowered. Here, the polyurethane foam produced according to the present invention has a density of from about 20 to about 100 kg/m³.

The polyurethane foam according to the present invention comprises a combination of a phenolic resin polyol and an aromatic amine polyol, not a polyether polyol, so that a flame retardancy and a heat resistance are provided. Further, the polyurethane foam according to the present invention has flexibility not inferior to the polyurethane foam in which an alternative for chlorofluorocarbon is used as a blowing agent. As a result, unwanted parts can be easily cut in a subsequent process and workability thereof is excellent.

### EXAMPLES

To further clarify the concept of the present invention, some examples of the invention will be described. It is to be understood that the invention is not limited to the details of the illustrated examples and the foregoing description, but may be embodied with various changes, modifications and improvements, which may occur to those skilled in the art without departing from the scope of the invention. Here, "%" and "parts" in the following description are on a mass basis.

First, a phenolic novolak resin was prepared and an alkylene oxide was added to the prepared phenolic novolak resin to obtain the intended phenolic resin polyol. A viscosity, a number average molecular weight, an amount of unreacted phenol (free phenol) of the phenolic novolak resin, and a viscosity and a hydroxyl number of the phenolic resin polyol were measured according to the following process. As aromatic amine polyol, a commercially available product having the EO/PO molar ratio of 25/75 (SANNIX HM-551 available from Sanyo Chemical Industries, Ltd., viscosity: 15000 mPa·s/25°C, hydroxyl number: 400 mgKOH/g) was provided as tolylene diamine polyol M. Tolylene diamine polyol N and O were synthesized according to the following process.

(1) Viscosity (mPa ·s) was measured with B-type viscometer in accordance with JIS K 7117-1.
(2) Hydroxyl number (mgKOH/g) was measured in accordance with JIS K 1557.
(3) A number average molecular weight and an amount of unreacted phenol was measured with a gel filtration chromatograph, 8020 series built-up system available from TOSOH CORPORATION (column: G1000HXL+G2000HXL, detector: UV 254 nm, carrier: tetrahydrofuran 1 mL/min, column temperature: 38°C). The number average molecular weight is in terms of standard polystyrene. The amount of unreacted phenol was found from a phenol curve calibration by using a measured value of peak height.

### <Preparation of phenolic novolak resin>

To a reaction vessel with a stirring device were added 9400 g of phenol, 1630 g of 92% paraformaldehyde, and 19 g of oxalic acid as an acid catalyst, and reacted at 100°C for 4 hours while being stirred and mixed. Then, water was removed under low pressure. Subsequently, unreacted phenol was removed under low pressure until it reaches a predetermined temperature, thereby preparing phenolic novolak resins a, b, and c. The obtained phenolic novolak resin a had the amount of unreacted phenol of 30%, a number average molecular weight of 160 and a viscosity at 80°C of 90 mPa·s, the obtained phenolic novolak resin b had the amount of unreacted phenol of 10%, a number average molecular weight of 260 and a viscosity at 80°C of 5000 mPa·s, the obtained phenolic novolak resin c had the amount of unreacted phenol of 5%, a number average molecular weight of 300 and a viscosity at 80°C of 8000 mPa·s.

Similarly, to a reaction vessel with a stirring device were added 9400 g of phenol, 1630 g of 92% paraformaldehyde, and 19 g of oxalic acid as an acid catalyst, and reacted at 100°C for 3 hours while being stirred and mixed. Then, water was removed under low pressure, thereby preparing a phenolic novolak resin d. The obtained phenolic novolak resin d had the amount of unreacted phenol of 35%, a number average molecular weight of 140 and a viscosity at 80°C of 70 mPa·s.

### <Preparation of phenolic resin polyol>

As shown in Table 1 below, to a pressure-resistant reaction vessel with a stirring device were added 4 kg of any one of the above described phenolic novolak resins and 200 g of potassium hydroxide as an alkali catalyst. Then, ethylene oxide (EO) or EO and propylene oxide (PO) is/ are added at a temperature of 150°C in an amount indicated in Table 1 while being stirred and mixed so as to be added to the phenolic novolak resin. When both of EO and PO were added, EO was added first, and PO was added next. Then, the potassium hydroxide was neutralized by acetic acid, thereby preparing six kinds of phenolic resin polyol (A, B, C, D, E and F). A hydroxyl number and a viscosity at 25°C of the prepared phenolic resin polyols were measured and Table 1 shows the result thereof.

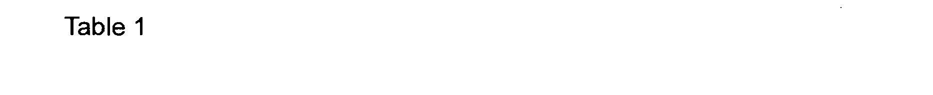

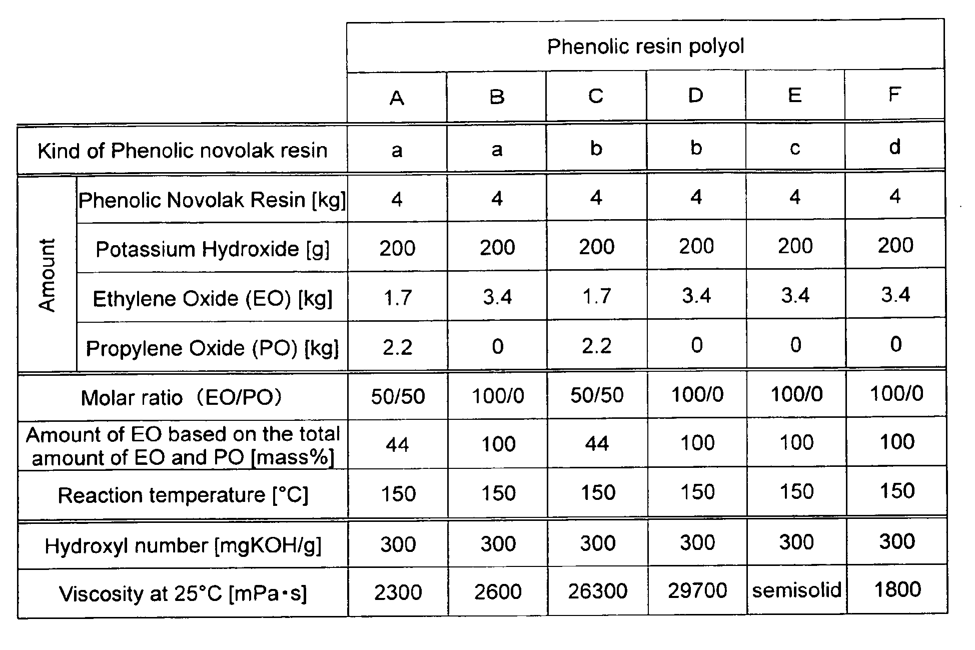

### <Preparation of tolylene diamine polyol N>

To a pressure-resistant reaction vessel with a stirring device were added 1 kg of tolylene diamine and 20 g of potassium hydroxide as a reaction catalyst. While stirring and mixing them, 3.4 kg of EO was added under pressure at a temperature of 115°C. Then, the catalyst was neutralized by acetic acid, thereby obtaining tolylene diamine polyol N. The obtained polyol had a viscosity of 3200 mPa·s/25°C and a hydroxyl number of 400 mgKOH/g.

### <Preparation of tolylene diamine polyol O>

To a pressure-resistant reaction vessel with a stirring device were added 1 kg of tolylene diamine and 20 g of potassium hydroxide as a reaction catalyst. While stirring and mixing them, 1.7 kg of EO and 2.2 kg of PO were added under pressure at a temperature of 115°C. Then, the catalyst was neutralized by acetic acid, thereby obtaining tolylene diamine polyol O. The obtained phenolic novolak resin has a viscosity of 11000 mPa· s/25°C and a hydroxyl number of 400 mgKOH/g.

### (Example 1)

First, as the polyol component, the above prepared phenolic resin polyol B and the above prepared tolylene diamine polyol M were provided, and to 50 parts of the phenolic resin polyol B and 50 parts of the tolylene diamine polyol M, as indicated in Table 2 below, were added 2 parts of the silicone foam stabilizer (product name: SH-193, available from Dow Corning Toray Co., Ltd.), 0.5 parts of the gelling catalyst (product name: KAOLIZER No.25, available from Kao Corporation), 3 parts of the amine blowing catalyst (product name: KAOLIZER No.26, available from Kao Corporation), 5 parts of water to generate the blowing agent, 30 parts of flam retardant (tris(chloropropyl)phosphate), and one part of the auxiliary blowing agent (sodium recinoleate), thereby preparing a polyol solution.

Secondly, the prepared polyol solution and crude MDI (product name: Lupranate M-11S commercially available from BASF INOAC polyurethanes Ltd.) as the polyisocyanate component were provided, and each of them was controlled to have a temperature of 10°C. Then, crude MDI was added to the polyol solution such that the NCO/OH equivalent ratio was 1.10, and immediately after the addition, the solution was stirring mixed at high speed by HOMO DISPER. Then, thus obtained foamable composition for polyurethane foam was immediately put into a quadrilateral metal mold, and an opening thereof was covered with an iron plate and left under ordinal pressure. As a result, the foamable composition for polyurethane foam was foamed and cured to produce a polyurethane foam having a plate-like shape.

A density, a thermal conductivity and changes thereof with the passage of times, a dimensional stability, and a flame retardancy of the obtained polyurethane foam were measured and results thereof are shown in Table 4 below.

In the evaluation of properties, "density" was measured in accordance with JIS K 7222. The measurement of "thermal conductivity (W/m·K) and changes thereof with the passage of time" of the obtained polyurethane foam was conducted by using a thermal conductivity analyzer (Anacon TCA POINT2 available from MADDERLAKE SCIENTIFIC GROUP COMPANY) in accordance with JIS A 1412-2 appendix A (provision) A6 of method of determination for thermal conductivity of heat insulating materials by means of comparison with a standard plate of known conductivity. The measurement of changes of the thermal conductivity with the passage of time was conducted in a state where the obtained polyurethane foam was left for 24 hours (initial value), one week, one month and two months under an atmosphere of 23°C. The "dimensional stability" was evaluated by a rate of change of dimension. From the obtained polyurethane foam, a piece of 150 mm × 150 mm × 30 mm was cut out and left stationary for 24 hours under atmosphere of 50°C. A rate of changes of the thickness thereof was measured to obtain the rate of change of dimension. "Good" denotes that the rate of changes of the dimension was less than 1%, "average" denotes that the rate of changes of the dimension was within a range from 1 to 3%, and "poor" denotes that the rate of changes of the dimension was more than 3%. Further, "flame retardancy" was evaluated as the following. A piece of 300 mm × 200 mm × 30 mm was cut out from the obtained polyurethane foam, and the piece was flamed by a gas torch positioned 100 mm away from the foam for 30 seconds. "Good" denotes that the test piece had no through hole after the test, "average" denotes that the test piece had a small through hole, and "poor" denotes that the test piece had a big through hole.

### (Examples 2 to 18)

Polyol solution were prepared in the same way as Example 1 with the exception that the amount and kind of phenolic resin polyol and tolylene diamine polyol shown in Table 2 and Table 3 below were used. Then, as in Example 1, using the obtained polyol solutions, foamable compositions for polyurethane foam were prepared, respectively, and polyurethane foams having plate shape were obtained. Here, the ethylene diamine polyol used in Examples 4 and 5 were EXCENOL-450ED (available from Asahi glass Urethane Co., Ltd.).

As in Example 1, a density, a thermal conductivity and changes thereof with the passage of time, a dimensional stability, and a flame retardancy of the obtained polyurethane foams were measured and results thereof are shown in Table 4 and Table 5 below.

### (Comparative Examples 1 to 5)

Polyol solutions were prepared in the same way as Example 1 with the exception that only phenolic resin polyol B was comprised in a polyol component (Comparative Example 1), or only tolylene diamine polyol M was comprised in a polyol component (Comparative Example 2), or the total amount of the phenolic resin polyol B and the tolylene diamine polyol M was less than 60%, based on the total polyol component (Comparative Examples 3, 4, and 5). Then, as in Example 1, using the obtained polyol solutions, foamable compositions for polyurethane foam were prepared, and polyurethane foams having plate shape were obtained. As in Example 1, a density, a thermal conductivity and changes thereof with the passage of time, a dimensional stability, and a flame retardancy of the obtained polyurethane foams were measured and result thereof are shown in Table 4 and Table 5 below.

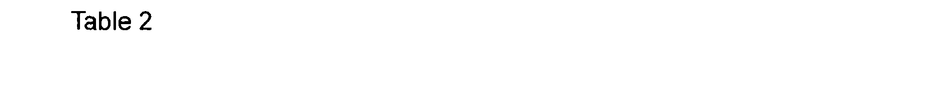

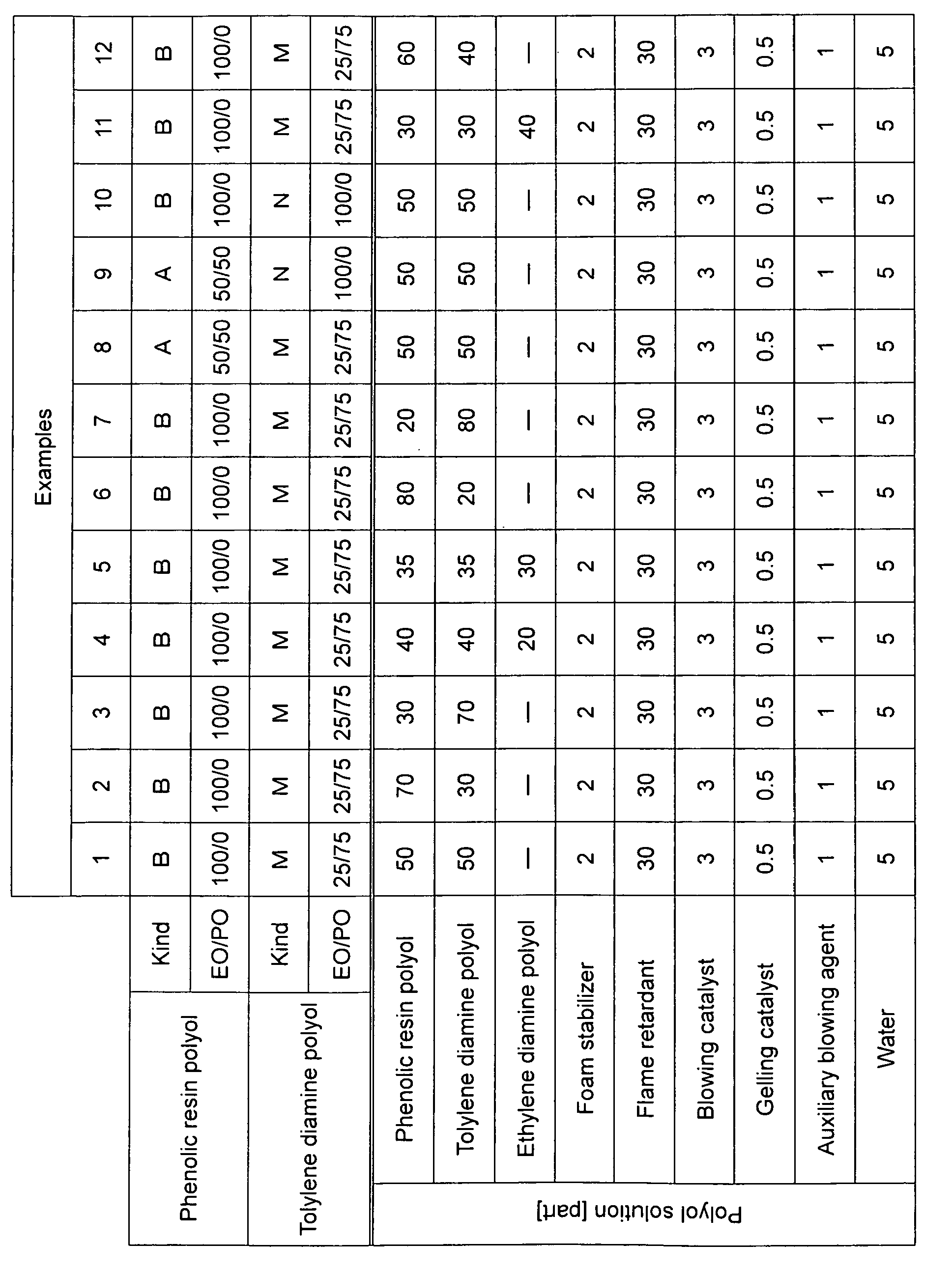

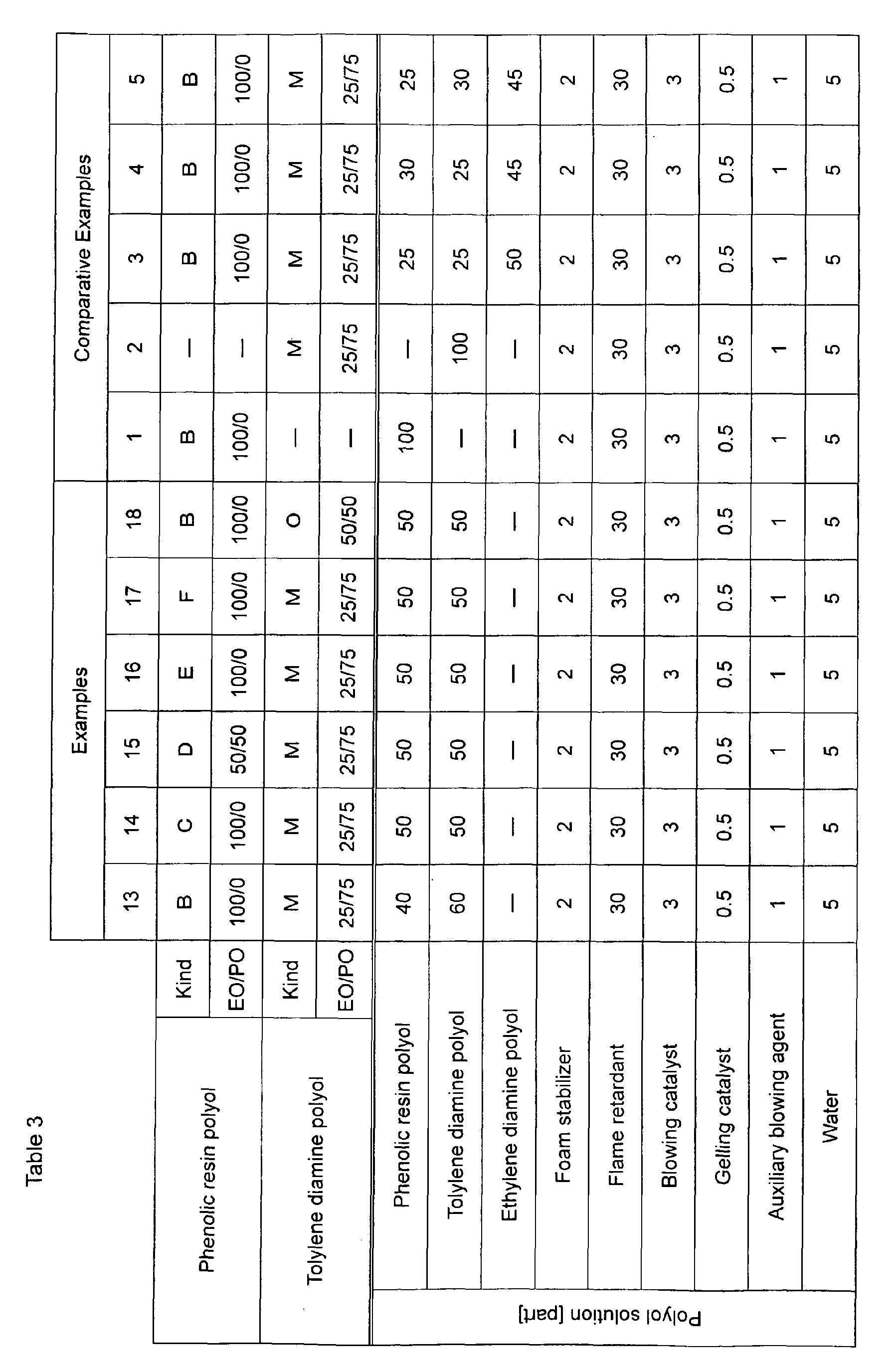

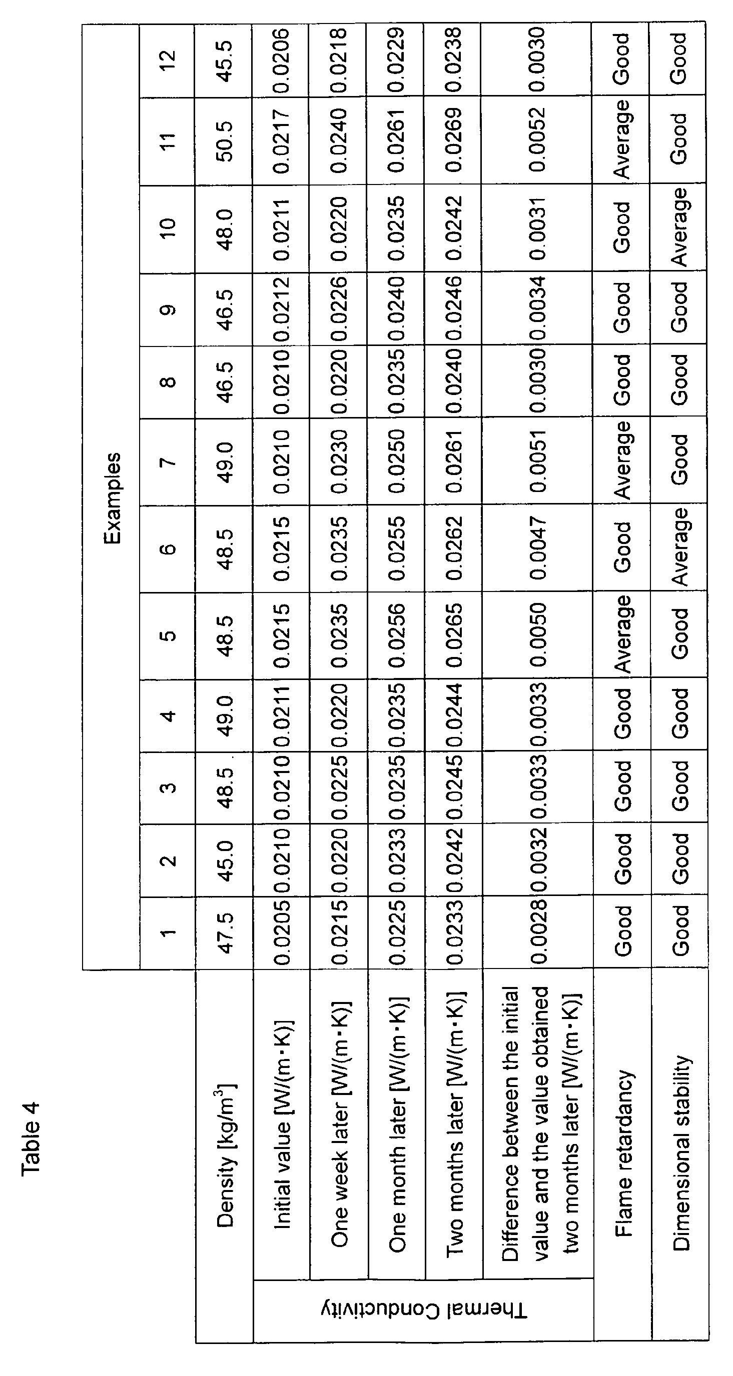

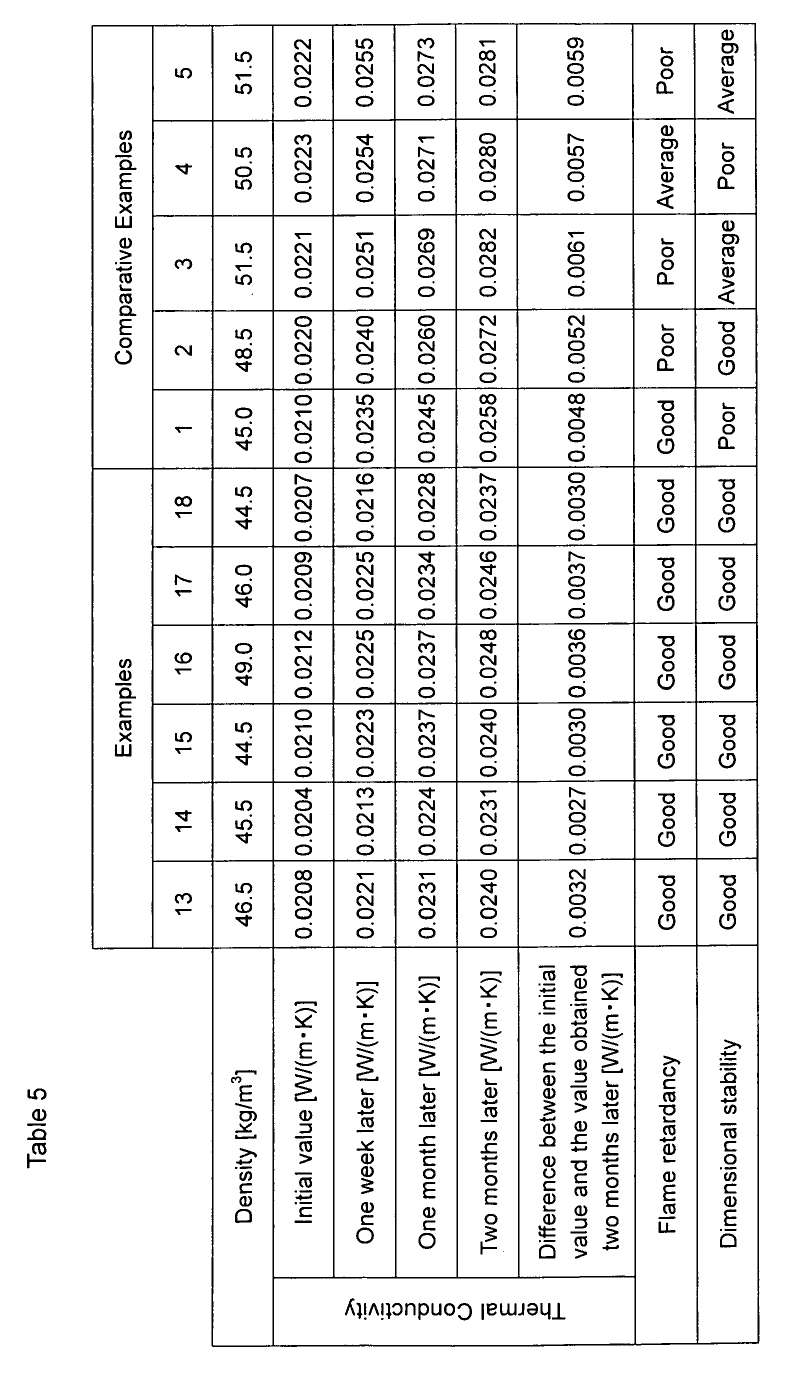

As apparent from the results shown in Table 4 and Table 5, each of the polyurethane foams obtained according to Examples 1 to 18 of the present invention has an initial value of thermal conductivity of less than 0.022 W/(m·K), even though water was used to generate a blowing agent, i.e., carbon dioxide was used as a blowing agent. Further, even after a long period of time (two months), the thermal conductivity thereof was less than 0.027 W/(m·K). It can be recognized that the polyurethane foam has a high functionality as a heat insulating material. Furthermore, each of the polyurethane foams of Examples 1 to 18 shows that it has excellent flame retardancy and a dimensional stability.

Meanwhile, it is recognized that Comparative Example 1 in which only phenolic resin polyol was comprised in the polyol component shows poor dimensional stability, and Comparative Example 2 in which only tolylene diamine polyol was comprised in the polyol component shows poor flame retardancy. Further, although both of the phenolic resin polyol and the tolylene diamine polyol were comprised in the polyol component, Comparative Examples 3 to 5 in which the total amount of the phenolic resin polyol and the tolylene diamine polyol was less than 60% of the total polyol component show poor flame retardancy and dimensional stability.

### (Comparative Examples 6 and 7)

Polyol solutions were prepared in the same way as Example 1, with the exception that 50 parts of phenolic resin polyol B and 50 parts of tolylene diamine to which an alkylene oxide was not added were used as the polyol component (Comparative Example 6) or 50 parts of tolylene diamine polyol M and 50 parts of phenolic novolak resin to which an alkylene oxide was added were used as the polyol component (Comparative Example 7). Then, crude MDI was added to each of the obtained polyol solutions, and the solutions were stirring mixed at high speed by HOMO DISPER. However, they were not sufficiently mixed and were brittle. Accordingly, favorable foams could not be obtained.

## Claims

1. A foamable composition comprising a combination of a polyol component and a polyisocyanate component, the foamable composition being used in the production of a polyurethane foam obtainable by reacting the polyol component with the polyisocyanate component and foaming the reacted combination of the polyol component and the polyisocyanate component in the presence of carbon dioxide,
wherein the polyol component includes a phenolic resin polyol obtained by adding at least one alkylene oxide to a phenolic novolak resin, and an aromatic amine polyol obtained by adding at least one alkylene oxide to an aromatic diamine, such that the total amount of the phenolic resin polyol and the aromatic amine polyol is 60% by mass or more, based on the total polyol component.

2. The foamable composition for polyurethane foam according to claim 1, wherein the carbon dioxide is generated by the reaction of water with the polyisocyanate component.

3. The foamable composition for polyurethane foam according to claim 1 or 2, wherein the phenolic novolak resin contains free phenols in an amount of from 1 to 50% by mass.

4. The foamable composition for polyurethane foam according to any one of claims 1 to 3, wherein the phenolic novolak resin contains free phenols in an amount of from 5 to 35% by mass.

5. The foamable composition for polyurethane foam according to any one of claims 1 to 4, wherein the phenolic novolak resin contains free phenols in an amount of from 10 to 30% by mass.

6. The foamable composition for polyurethane foam according to any one of claims 1 to 5, wherein the aromatic diamine is a tolylene diamine.

7. The foamable composition for polyurethane foam according to any one of claims 1 to 6, wherein the at least one alkylene oxide added to the phenolic novolak resin or the aromatic diamine is selected from an ethylene oxide, a propylene oxide and a mixture thereof.

8. The foamable composition for polyurethane foam according to any one of claims 1 to 7, wherein the at least one alkylene oxide added to the phenolic novolak resin is one of an ethylene oxide and a combination of 50% by mass or more of an ethylene oxide and 50% by mass or less of a propylene oxide.

9. The foamable composition for polyurethane foam according to any one of claims 1 to 7, wherein 10% to 100% by mass of the at least one alkylene oxide added to the phenolic novolak resin is a propylene oxide.

10. The foamable composition for polyurethane foam according to any one of claims 1 to 7, wherein 10% to 100% by mass of the at least one alkylene oxide added to the aromatic diamine is a propylene oxide.

11. The foamable composition for polyurethane foam according to any one of claims 1 to 10, wherein each of the phenolic resin polyol and the aromatic amine polyol is present in an amount of 30% by mass or more, based on the total polyol component.

12. The foamable composition for polyurethane foam according to any one of claims 1 to 10, wherein each of the phenolic resin polyol and the aromatic amine polyol is present in an amount of 40% by mass or more, based on the total polyol component.

13. The foamable composition for polyurethane foam according to any one of claims 1 to 12, wherein the phenolic resin polyol and the aromatic amine polyol are present in a mass ratio of 3/7 to 7/3.

14. A polyurethane foam produced by foaming and curing the foamable composition for polyurethane foam according to any one of claims 1 to 13.
